(19) Europäisches Patentamt
European Patent Office
Office européen des brevets

(11) **EP 4 592 111 A1**

(12) **EUROPEAN PATENT APPLICATION**
published in accordance with Art. 153(4) EPC

(43) Date of publication:
**30.07.2025 Bulletin 2025/31**

(21) Application number: **23867898.1**

(22) Date of filing: **31.07.2023**

(51) International Patent Classification (IPC):
**B60J 5/10** $^{(2006.01)}$   **B29C 43/18** $^{(2006.01)}$
**B29C 45/14** $^{(2006.01)}$   **B29C 70/42** $^{(2006.01)}$

(52) Cooperative Patent Classification (CPC):
**B29C 43/18; B29C 45/14; B29C 70/42; B60J 5/10**

(86) International application number:
**PCT/JP2023/027973**

(87) International publication number:
**WO 2024/062772 (28.03.2024 Gazette 2024/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.09.2022 JP 2022149322**
**09.12.2022 JP 2022196925**

(71) Applicant: **Teijin Limited**
**Osaka-shi, Osaka 530-0005 (JP)**

(72) Inventors:
• **YOKOYAMA, Keizo**
**Osaka-shi, Osaka 530-0005 (JP)**
• **KITAGAWA, Masahiro**
**Osaka-shi, Osaka 530-0005 (JP)**
• **YOKOMIZO, Hodaka**
**Osaka-shi, Osaka 530-0005 (JP)**

(74) Representative: **Hoffmann Eitle**
**Patent- und Rechtsanwälte PartmbB**
**Arabellastraße 30**
**81925 München (DE)**

(54) **DOOR INNER PANEL MANUFACTURING METHOD, AND DOOR INNER PANEL**

(57)   Provided are a door inner panel manufacturing method and a door inner panel with which it is possible to ensure the mechanical strength of a side frame that extends in a vertical direction in a relatively narrow region serving as a window frame. This door inner panel manufacturing method is a method for manufacturing a door inner panel that includes a side frame which extends in a vertical direction and which is molded integrally using a composite material X including reinforcing fibers dispersed in an in-plane direction, and an injection molding material Y, the manufacturing method including the following steps (1) to (4): (1) a step for arranging the composite material X on a molding fixed die; (2) a step for lowering a molding moveable die to cause the molding moveable die to come into contact with the composite material X; (3) a step for injecting the injection molding material Y into a molding die; and (4) a step for pressing the composite material X and the injection molding material Y inside the molding die to integrally mold the door inner panel.

Fig. 1

**Description**

TECHNICAL FIELD

The present invention relates to a method of manufacturing a door inner panel for an automobile that includes both side frames extending in a vertical direction and a window opening portion between the side frames, and is integrally molded from a composite material and an injection-molding material, and the door inner panel.

BACKGROUND ART

A door inner panel for an automobile refers to a door panel on an inside of a vehicle, of door panels constituting a vehicle door. Conventional door inner panels are manufactured using a thin cold-rolled steel plate, and various measures have been taken to ensure the strength and rigidity of the door inner panels.

A composite material containing reinforcing fibers such as carbon fibers and glass fibers as reinforcing materials has high tensile strength and tensile elastic modulus, is excellent in dimensional stability because of its small linear expansion coefficient, and is further excellent in heat resistance, chemical resistance, fatigue resistance, abrasion resistance, electromagnetic wave shielding property, and X-ray transmittance. Therefore, the composite material is widely applied to automobiles, sports and leisure, aerospace, general industrial applications, and the like.

Patent Literature 1 discloses a method of manufacturing a back door inner panel by integral molding of two types of reinforced plastics, and the reinforced plastics for forming both sides of a window frame portion have a relatively high mechanical strength.

Patent Literature 2 discloses a back door inner panel in which a reinforcing portion is formed of a prepreg and other portions are formed of a sheet molding compound. A prepreg is generally a sheet substrate in which continuous fibers aligned in one direction are impregnated with a resin. Since the prepreg includes the continuous fibers aligned in one direction, slight deviation of the prepreg cannot develop desired physical properties. Therefore, for molding of the prepreg, precise arrangement of the prepreg and prevention of positional deviation are required.

Patent Literature 3 discloses a method of manufacturing a molded body by placing a plate-shaped material in a mold and then injecting an injection material into the mold.

Patent Literature 4 discloses a method of providing a manufacturing method in which an injection-molded product containing a plurality of sheets can be manufactured at a lower cost. In Patent Literature 4, a plurality of resin-impregnated reinforcing member sheets having holes are arranged, a movable mold is moved and clamped, and a resin is injected and then placed in a space between the resin-impregnated reinforcing member sheets.

CITATION LIST

PATENT LITERATURE

Patent Literature 1: WO2015/091448
Patent Literature 2: JP-A-2019-10910
Patent Literature 3: WO2020/196076
Patent Literature 4: JP-A-2020-179549

SUMMARY OF INVENTION

TECHNICAL PROBLEM

However, in the case of forming the back door inner panel by continuously injection-molding the two types of reinforced plastics, it is difficult to control the fiber orientations in both side frames extending in the vertical direction. Since an injection-molding material is a kneaded material, the fiber length becomes short, and both side frames formed only from the injection-molding material has no required strength.

The prepreg generally contains continuous fibers, but slight deviation of the prepreg (only by a few millimeters) during molding makes it difficult to obtain desired physical properties. Therefore, it is necessary to take measures such as an improvement of a mold so as to prevent deviation of the prepreg.

Patent Literature 3 does not study a door inner panel at all.

Patent Literature 4 does not study a door inner panel at all. Furthermore, in the method of Patent Literature 4, as the resin-impregnated reinforcing member sheet, a sheet obtained by impregnating a plain woven cloth made of glass fibers having a line diameter of about 17 $\mu$m with a polypropylene resin is used. The use of a material in which reinforcing fibers are continuous and oriented in a specific direction, like a plain woven cloth makes it difficult to obtain desired physical properties when the material is slightly deviated (only by a few millimeters) under supply of an injection material and press-molding Therefore, it is necessary to take measures such as an improvement of a mold so as to prevent deviation of the resin-impregnated reinforcing member sheet. In particular, in the case of attempting to impregnate a plurality of reinforcing members with a resin, the process becomes too complicated.

An object of the present invention is to provide a method of manufacturing a door inner panel capable of securing mechanical strength in a side frame extending in a vertical direction, which is a relatively narrow region to become a window frame, and the door inner panel.

SOLUTION TO PROBLEM

In order to solve the above problems, the present invention provides the following means.

<1> A method of manufacturing a door inner panel including a side frame that is integrally molded from a composite material X containing reinforcing fibers dispersed in an in-plane direction and an injection-molding material Y and extends in a vertical direction, the method including the following steps (1) to (4):

> (1) placing the composite material X on a fixed mold of a mold;
> (2) lowering a movable mold of the mold to bring the movable mold into contact with the composite material X;
> (3) injecting the injection-molding material Y into the mold; and
> (4) pressing the composite material X and the injection-molding material Y in the mold to integrally mold the door inner panel.

<2> The method of manufacturing a door inner panel according to <1>, wherein the mold has a region where the composite material X is placed at a position corresponding to a side frame, and
has a first gate for injecting the injection-molding material Y into the mold at the region where the composite material X is placed.

<3> The method of manufacturing a door inner panel according to <1> or <2>, wherein the composite material X is brought into contact with a cavity wall surface of the mold to form a skin layer having an X portion that is molded from the composite material X.

<4> The method of manufacturing a door inner panel according to <3>, wherein the skin layer having the X portion is formed on a surface of the door inner panel, the surface facing an inside of a vehicle.

<5> The method of manufacturing a door inner panel according to <3>, wherein the skin layer having the X portion is formed on a surface of the door inner panel, the surface facing an outside of a vehicle.

<6> The method of manufacturing a door inner panel according to any one of <1> to <5>, wherein

> the mold having the first gate for injecting the injection-molding material Y into the mold at the region where the composite material X is placed, and a second gate for injecting the injection-molding material Y into the mold at a region other than the region where the composite material X is placed, and
> a number n1 of the first gate and a number n2 of the second gate satisfy n1 > n2 $\geq$ 0.

<7> The method of manufacturing a door inner panel according to any one of <1> to <5>, wherein

> the mold has the first gate for injecting the injection-molding material Y at the region where the composite material X is placed in the mold, and a second gate for injecting the injection-molding material Y at a region other than the region where the composite material X is placed in the mold, and
> an amount V1 of the injection-molding material Y discharge from the first gate and an amount V2 of the injection-molding material Y discharged from the second gate satisfy V1 > V2 $\geq$ 0.

<8> The method of manufacturing a door inner panel according to <1> or <2>, wherein the injection-molding material Y is brought into contact with a cavity wall surface of the mold to form a skin layer having a Y portion that is molded from the injection-molding material Y.

<9> The method of manufacturing a door inner panel according to any one of <1>, <2>, and <8>, wherein

> the mold has the first gate for injecting the injection-molding material Y at the region where the composite material X is placed in the mold, and a second gate for injecting the injection-molding material Y at a region other than the region where the composite material X is placed in the mold, and

a number n1 of the first gate and a number n2 of the second gate satisfy 0 < n1 < n2.

<10> The method of manufacturing a door inner panel according to any one of <1>, <2>, <8>, and <9>, wherein

the mold has the first gate for injecting the injection-molding material Y at the region where the composite material X is placed in the mold, and the second gate for injecting the injection-molding material Y at the region other than the region where the composite material X is placed in the mold, and
an amount V1 of the injection-molding material Y discharge from the first gate and an amount V2 of the injection-molding material Y discharged from the second gate satisfy 0 < V1 < V2.

<11> The method of manufacturing a door inner panel according to any one of <1> to <10>, wherein

a surface of the side frame on the inside of the vehicle is an interior design portion of the vehicle, and
in the step (4), a shape of a grain provided on an inner wall surface of a cavity of the mold is transferred to the interior design portion.

<12> The method of manufacturing a door inner panel according to any one of <1> to <11>, wherein

at least one of the movable mold and the fixed mold has a hole-forming member for forming a hole in the door inner panel,
in a step prior to the step (1), a hole Xa is formed in the composite material X, and
in the step (1), the composite material X is placed on the mold so that the hole Xa corresponds to the hole-forming member.

<13> The method of manufacturing a door inner panel according to <12>, wherein the hole Xa is formed at a position corresponding to an upper portion of the side frame of the composite material X and a position corresponding to a lower portion of the side frame.
<14> The method of manufacturing a door inner panel according to any one of <1> to <13>, wherein in the step (3), the injection-molding material Y is kneaded before injection, and the injection-molding material Y is filled in a clearance between the movable mold and the fixed mold.
<15> The method of manufacturing a door inner panel according to <1>, wherein

the composite material X contains reinforcing fibers A having a weight average fiber length LwA of 1 mm or more and 100 mm or less,
the injection-molding material Y contains reinforcing fibers B having a weight average fiber length LwB smaller than LwA, and
a mechanical strength of a reinforcing portion formed from the composite material X is higher than a mechanical strength of a main body formed from the injection-molding material Y.

<16> The method of manufacturing a door inner panel according to any one of <1> to <15>, wherein the door inner panel is a back door inner panel.
<17> The method of manufacturing a door inner panel according to <16>, wherein a metal fitting for connecting a hinge is placed at a region connected to the hinge before the step (2), and the metal fitting is insert-molded with the composite material X and the injection-molding material Y.
<18> The method of manufacturing a door inner panel according to <16>, wherein a metal fitting for connecting a trunk lock is placed at a region where the trunk lock is mounted before the step (2), and the metal fitting is insert-molded with the composite material X and the injection-molding material Y.
<19> The method of manufacturing a door inner panel according to any one of <16> to <18>, wherein

the door inner panel has a lower half portion, a pair of side frames extending upwardly from an upper left end and an upper right end of the lower half portion, and a beam portion connecting the upper ends of the pair of side frames, and
a central portion of the beam portion and the lower half portion are formed from an injection-molding material Y.

<20> The method of manufacturing a door inner panel according to <17> or <18>, wherein the metal fitting is a metal fastener having a bolt insertion portion, and
the door inner panel has a hole at a position corresponding to the bolt insertion portion.
<21> The method of manufacturing a door inner panel according to <20>, wherein a hole is formed at a position corresponding to the bolt insertion portion of the Y portion molded from the injection-molding material Y.

<22> The method of manufacturing a door inner panel according to <20> or <21>, wherein the metal fitting is in contact with the Y portion molded from the injection-molding material Y.

<23> The method of manufacturing a door inner panel according to <20> or <21>, wherein the metal fitting is not in contact with the X portion molded from the composite material X.

<24> The method of manufacturing a door inner panel according to any one of <20> to <23>, wherein the door inner panel has a rib within 30 mm or less from the metal fitting.

<25> The method of manufacturing a door inner panel according to <20> or <21>, wherein the door inner panel has an uneven thickness portion within 30 mm from the metal fitting.

<26> The method of manufacturing a back door inner panel according to any one of <20> to <25>, wherein in the step (4), a hole is formed at a position corresponding to the bolt insertion portion.

<27> The method of manufacturing a door inner panel according to any one of <20> to <22> and <25>, wherein

at least one of the movable mold and the fixed mold includes a hole-forming member for forming a hole at a position corresponding to the bolt insertion portion,

in a step prior to the step (1), a hole Xa is formed in the composite material X,

in the step (1), the composite material X is placed on the mold so that the hole Xa corresponds to the hole-forming member, and

in the step (4), a hole is formed from the hole-forming member at a composition corresponding to the bolt insertion portion.

<28> A door inner panel including:

a lower half portion;

a pair of side frames extending upwardly from an upper left end and an upper right end of the lower half portion; and

a beam portion connecting the upper ends of the pair of side frames,

wherein the pair of the side frames has an X portion molded from a composite material X containing reinforcing fibers dispersed in an in-plane direction and a Y portion molded from an injection-molding material Y, and

a central portion of the beam portion and the lower half portion include the Y portion molded from the injection-molding material Y.

ADVANTAGEOUS EFFECTS OF INVENTION

Since a door-in panel of the present invention is formed from the composite material X in which the reinforcing fibers are dispersed in the in-plane direction, slight flowing of the composite material X during molding does not significantly affect basic mechanical properties. Therefore, in manufacturing the door inner panel for an automobile having the window opening portion, a desired mechanical strength can be easily obtained by using the composite material X even in both side frames extending in the vertical direction of the vehicle, the side frames which are a relatively narrow region serving as a window frame, with the window opening portion being interposed therebetween. Further, the shape followability is improved as compared with a composite material containing continuous fibers, such as plain woven cloth.

BRIEF DESCRIPTION OF DRAWINGS

FIG. 1 is a schematic view of a door inner panel 1 according to an embodiment of the present invention.
FIG. 2 is a cross-sectional view taken along line II-II of the door inner panel 1 in FIG. 1.
FIG. 3 is a cross-sectional view showing a state in which a bracket 101 is attached to a beam portion 2 in FIG. 2 on the inside of a vehicle.
FIG. 4 is a cross-sectional view taken along line IV-IV of the door inner panel 1 in FIG. 1.
FIG. 5 is a cross-sectional view showing a state in which a bracket 111 is attached to a side frame 3L in FIG. 4 on the inside of a vehicle.
FIG. 6 is a cross-sectional view taken along line VI-VI of the door inner panel 1 in FIG. 1.
FIG. 7 is a cross-sectional view showing a state in which a bracket 121 is attached to a lower half portion 4 in FIG. 6 on the inside of a vehicle.
FIG. 8 is a view showing a state in which a composite material X is placed on a fixed mold 201.
FIG. 9 is a view showing a state in which a movable mold 301 is brought close to the fixed mold 201 and brought into contact with the composite material X.

FIG. 10 is a view showing a state in which the injection-molding material Y is injected into the mold through a gate 203 provided in the fixed mold 201.

FIG. 11 is a view showing a state in which the composite material X and the injection-molded material Y are pressed in the mold and integrally molded.

FIG. 12 is a view showing a state in which the composite material X is placed in an upper portion of the fixed mold 201 with a hole-forming member 205 being inserted into a hole Xa.

FIG. 13 is a plan view of the fixed mold 201.

FIG. 14 is a plan view of a fixed mold 201A according to a second embodiment.

FIG. 15 is a horizontal cross-sectional view of a fixed mold 201B and a movable mold 301B provided so as to be openable and closable in a horizontal direction.

FIG. 16 is a perspective view of a box-shaped molded body 400.

FIG. 17 is a plan view of a composite material having a pattern-cut shape.

FIG. 18 is a front view of a fixed mold 201C in a state in which the pattern-cut composite material X is fixed by a fixing member 210C.

FIG. 19 is a horizontal cross-sectional view of the fixed mold 201C in which the composite material X is fixed by the fixing member 210C, and a movable mold 301C.

DESCRIPTION OF EMBODIMENTS

[First Embodiment]

Hereinafter, a first embodiment of the present invention will be described in detail.

[Door Inner Panel]

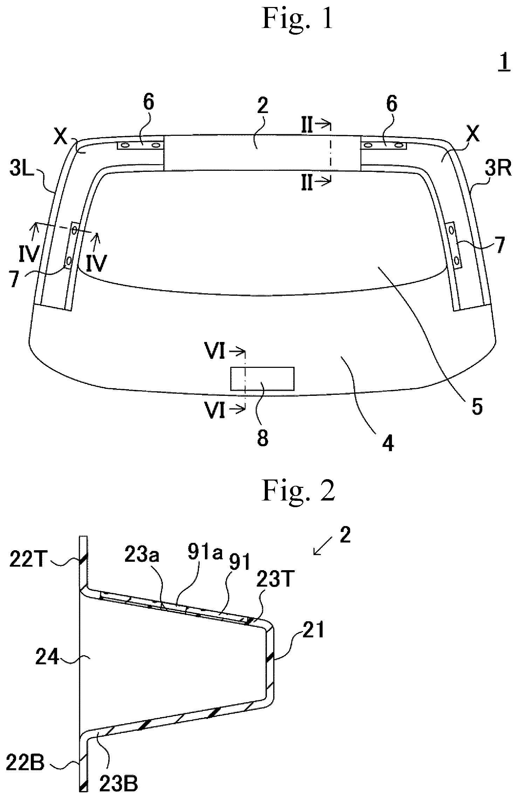

FIG. 1 is a schematic view of a door inner panel 1 according to an embodiment of the present invention. The door inner panel 1 has a beam portion 2, a pair of side frames 3L and 3R, and a lower half portion 4. The pair of side frames 3L and 3R extend upwardly from an upper left end and an upper right end of the lower half portion 4, respectively, and upper ends of the side frames 3L and 3R are connected to each other through the beam portion 2.

A portion surrounded by the beam portion 2, the side frames 3L and 3R, and the lower half portion 4 is a window opening portion 5. The side frames 3L and 3R extend in the vertical direction of a vehicle portion with the window opening portion 5 being interposed, and form a so-called window frame.

The door inner panel 1 of the present invention is preferably a back door inner panel.

A back door preferably includes the door inner panel 1 that is located on the inside of a vehicle, that is, on the front side of the vehicle, and a door outer panel that is located on the outside of the vehicle, that is, on the rear side of the vehicle. The door outer panel may be a resin panel.

An interior panel may be provided on the inside of the vehicle than the door inner panel 1.

Hereinafter, the "back door inner panel" may simply be referred to as "door inner panel".

For example, a back door on which the door inner panel 1 of the present invention is mounted is preferably a back door of vertical opening and closing type or horizontal opening and closing type that is provided at the rear end of the body of an automobile. The back door is connected to the vehicle body through a hinge so as to be openable and closable in a vertical direction or a horizontal direction. For opening and closing the back door in the vertical direction, the hinge is provided at an upper end portion of the back door. The back door swings in the vertical direction or the horizontal direction with the hinge functioning as a fulcrum to open and close an opening of the vehicle body.

The door inner panel 1 includes a hinge fastening portion 6 for connecting the hinge. For opening and closing the back door in the vertical direction, the hinge fastening portion 6 is preferably provided at the upper end portion of the door inner panel 1.

For opening and closing the back door in the vertical direction, one end of a bar-shaped spring built-in damper is attached to both left and right side portions of the rear end of the vehicle body, and the other end of the damper is connected to both side edges of the door inner panel of the back door in the vehicle width direction through a damper stay, so that the back door can be opened and closed with the back door being biased by the damper. The damper stay is a fastener for the damper, and the damper prevents unintentional closing of the back door.

A damper fastening portion 7 is preferably provided at a portion of the door inner panel 1 to which the damper stay is attached. The damper is preferably fixed to the door inner panel 1 by fastening and fixing the damper stay to the damper fastening portion 7.

Various functional components may be attached to the door inner panel 1, or an attachment space for an electric component may be provided in the door inner panel 1. For example, functional components such as a door lock, a window regulator, an inside handle, a door arm rest, a door trim pad, a weather strip, and a door check link receiver, and mounting portions of electric components such as a speaker, a switch for an electric remote control mirror, and a switch for a power window are each provided at appropriate positions of the door inner panel 1.

The door inner panel 1 may include a trunk lock 8. In FIG. 1, the trunk lock 8 is provided at a central portion of a lower end of the lower half portion 4.

The door inner panel 1 of the present invention has a resin panel formed from a composite material X and an injection-molding material Y as molding materials. The composite material X is placed in at least portions of the side frames 3L and 3R, and the injection-molding material Y and the composite material X are integrally molded to form the door inner panel .

A central portion of the beam portion 2 and the lower half portion 4 are preferably formed from the injection-molding material Y.

The composite material X forms a reinforcing portion of the door inner panel 1. The mechanical strength of the reinforcing portion is higher than the mechanical strength of a main body formed from the injection-molding material Y.

In addition to the resin panel, the door inner panel 1 may include metal fittings 91 to 93 (see FIGs. 2 to 7) which are each integrally molded as described later.

The composite material X contains reinforcing fibers and a matrix resin. The composite material X contains the reinforcing fibers that are dispersed in an in-plane direction in the matrix resin. The use of the composite material X in which the reinforcing fibers are dispersed in the in-plane direction do not significantly affect the physical properties of the molded resin panel even when the composite material X is deviated from the desired position during molding. Therefore, a manufacturing process can be simplified, and the quality of the obtained molded body (door inner panel 1) can be stabilized.

Hereinafter, the "door inner panel" or the "back door inner panel" may be referred to as "molded body".

The metal fitting 91 may be attached to the door inner panel 1 at the position of the hinge fastening portion 6.

The metal fitting 92 may be attached at the position of the damper fastening portion 7. The metal fittings may be provided so as to be integrated with the resin panel of the back door inner panel 1 by insert molding. The insert molding refers to a molding method in which a resin is placed around a metal fitting inserted into a mold and is integrated with the metal fitting. A method for insert molding is not particularly limited.

[Cross-Sectional Shape of Resin Panel]

The cross-sectional shape of the resin panel is not particularly limited. It is preferable that the resin panel have at least one flat portion. The cross-sectional shape may include a T-shape, an L-shape, a C-shape, a hat-shaped shape, or a three-dimensional shape including these shapes, and may further include a concavo-convex shape (for example, a rib, a boss, or the like).

It is preferable that the resin panel have a shape including a portion having a hat-shaped cross section.

FIG. 2 is a cross-sectional view taken along line II-II of the door inner panel 1 in FIG. 1. As shown in FIG. 2, the beam portion 2 has an inner wall 21 disposed on the inside of the vehicle, outer walls 22T and 22B disposed on the outside of the vehicle, a connecting wall 23T connecting the inner wall 21 and the outer wall 22T, and a connecting wall 23B connecting the inner wall 21 and the outer wall 22B. The connecting wall 23T is connected to an upper end portion of the inner wall 21, and the outer wall 22T is connected to an upper end portion of the connecting wall 23T. The connecting wall 23B is connected to a lower end portion of the inner wall 21, and the outer wall 22B is connected to a lower end portion of the connecting wall 23B.

As shown in FIG. 2, the metal fitting 91 is provided so as to be integrated with the connecting wall 23T. It is preferable that the metal fitting 91 be provided so as to be integrated with the connecting wall 23T by insert molding. The metal fitting 91 has a bolt insertion hole 91a (bolt insertion portion). It is preferable that the connecting wall 23T have a hole 23a at a position corresponding to the bolt insertion hole 91a.

The beam portion 2 may further have a rib 24 that connects the connecting walls 23T and 23B to each other.

The rib 24 is preferably provided at a distance of 30 mm or less from the metal fitting 91. On the other hand, the rib 24 may be provided at a position of more than 30 mm from the metal fitting 91. The rib 24 may be formed from the composite material X, or a rib 44 may be formed from the injection-molding material Y.

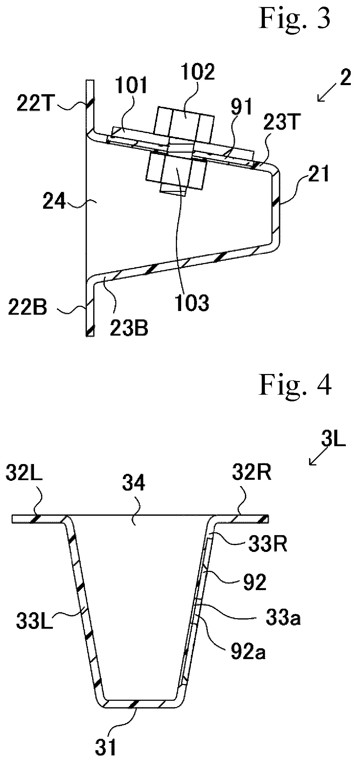

FIG. 3 is a cross-sectional view showing a state in which a bracket 101 is attached to the beam portion 2 in FIG. 2 on the inside of the vehicle. As shown in FIG. 3, a bolt 102 is inserted through the metal fitting 91 and the bracket 101, and a nut 103 is fastened to the bolt 102, so that the bracket 101 is attached to the beam portion 2. By attaching a hinge to the bracket 101, the hinge can be attached to the door inner panel 1. As shown in FIG. 3, it is preferable that the bolt 102 be inserted into the bracket 101 and the metal fitting 91 from the inside of the vehicle and be fastened to the nut 103 on the outside of the vehicle.

Strength can be secured by using the metal fitting 91 in a portion to be connected to the hinge.

It is preferable that the bracket 101 be in surface contact with only the metal fitting 91 and not in contact with the resin panel. When only metals of the metal fitting 91 and the bracket 101 come into surface contact with each other, the stability of the fastening is improved. An area S1 of a contact surface of the bracket 101 with the metal fitting 91 is preferably smaller than an area S2 of a portion where the metal fitting 91 is exposed from the resin panel. When S1 < S2 is satisfied, the resin panel is not disposed between the metal fitting 91 and the bracket 101 even under surface contact of the metal fitting 91 embedded in the resin panel with the bracket 101, and the fastening strength can be stabilized.

It is preferable that a portion of the resin panel in contact with the metal fitting 91 be formed only from the molding material Y.

FIG. 4 is a cross-sectional view taken along line IV-IV of the door inner panel 1 in FIG. 1. As shown in FIG. 4, the side frame 3L has an inner wall 31 disposed on the inside of the vehicle, outer walls 32R and 32L disposed on the outside of the vehicle, a connecting wall 33R connecting the inner wall 31 and the outer wall 32R, and a connecting wall 33L connecting the inner wall 31 and the outer wall 32L. The connecting wall 33R is connected to a right end portion of the inner wall 31, and the outer wall 32R is connected to a right end portion of the connecting wall 33R. The connecting wall 33L is connected to a left end portion of the inner wall 31, and the outer wall 32L is connected to a left end portion of the connecting wall 33L.

As shown in FIG. 4, the metal fitting 92 is provided so as to be integrated with the connecting wall 33R. It is preferable that the metal fitting 92 be provided so as to be integrated with the connecting wall 33R by insert molding. The metal fitting 92 has a bolt insertion hole 92a (bolt insertion portion). It is preferable that the connecting wall 33R have a hole 33a at a position corresponding to the bolt insertion hole 92a.

The side frame 3L may further have a rib 34 that connects the connecting walls 33R and 33L to each other. The rib 34 is preferably provided at a distance of 30 mm or less from the metal fitting 92. On the other hand, the rib 34 may be provided at a position of more than 30 mm from the metal fitting 92. The rib 34 may be formed from the composite material X, or the rib 34 may be formed from the injection-molding material Y.

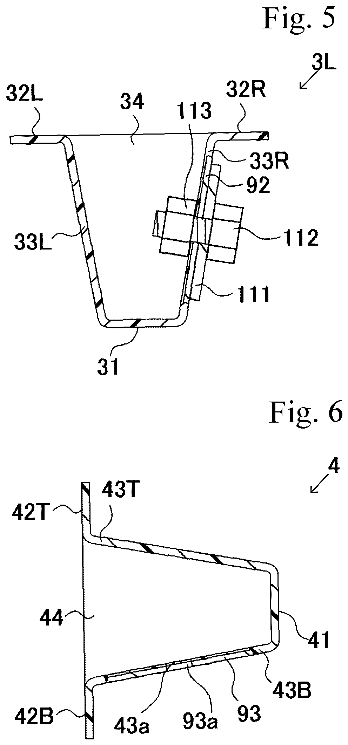

FIG. 5 is a cross-sectional view showing a state in which a bracket 111 is attached to the side frame 3L in FIG. 4 on the inside of a vehicle. As shown in FIG. 5, a bolt 112 is inserted through the metal fitting 92 and the bracket 111, and a nut 113 is fastened to the bolt 112, so that the bracket 111 is attached to the side frame 3L. By attaching a damper stay to the bracket 111, a damper can be attached to the door inner panel 1. As shown in FIG. 5, it is preferable that the bolt 112 be inserted into the bracket 111 and the metal fitting 92 from the inside of the vehicle and be fastened to the nut 113 on the outside of the vehicle.

Strength can be secured by using the metal fitting 92 in a portion to be connected to the damper.

It is preferable that the bracket 111 be in surface contact with only the metal fitting 92 and not in contact with the resin panel. When only metals of the metal fitting 92 and the bracket 111 come into surface contact with each other, the stability of the fastening is improved. An area S1 of a contact surface of the bracket 111 with the metal fitting 92 is preferably smaller than an area S2 of a portion where the metal fitting 92 is exposed from the resin panel. When S1 < S2 is satisfied, the resin panel is not disposed between the metal fitting 92 and the bracket 111 even under surface contact of the metal fitting 92 embedded in the resin panel with the bracket 111, and the fastening strength can be stabilized.

It is preferable that a portion of the resin panel in contact with the metal fitting 92 be formed only from the molding material Y.

The side frame 3R is substantially left-right symmetric with respect to the shape of the side frame 3L, and therefore a cross-sectional shape is not shown.

FIG. 6 is a cross-sectional view taken along line VI-VI of the door inner panel 1 in FIG. 1. As shown in FIG. 6, the lower half portion 4 has an inner wall 41 disposed on the inside of the vehicle, outer walls 42T and 42B disposed on the outside of the vehicle, a connecting wall 43T connecting the inner wall 41 and the outer wall 42T, and a connecting wall 43B connecting the inner wall 41 and the outer wall 42B. The connecting wall 43T is connected to an upper end portion of the inner wall 41, and the outer wall 42T is connected to an upper end portion of the connecting wall 43T. The connecting wall 43B is connected to a lower end portion of the inner wall 41, and the outer wall 42B is connected to a lower end portion of the connecting wall 43B.

As shown in FIG. 6, the metal fitting 93 is provided so as to be integrated with the connecting wall 43T. It is preferable that the metal fitting 93 be provided so as to be integrated with the connecting wall 43T by insert molding. The metal fitting 93 has a bolt insertion hole 93a (bolt insertion portion). It is preferable that the connecting wall 43B have a hole 43a at a position corresponding to the bolt insertion hole 93a.

The lower half portion 4 may further have a rib 44 that connects the connecting walls 43T and 43B to each other. The rib 44 is preferably provided at a distance of 30 mm or less from the metal fitting 93. On the other hand, the rib 44 may be provided at a position of more than 30 mm from the metal fitting 93. The rib 44 may be formed from the composite material X, or the rib 44 may be formed from the injection-molding material Y.

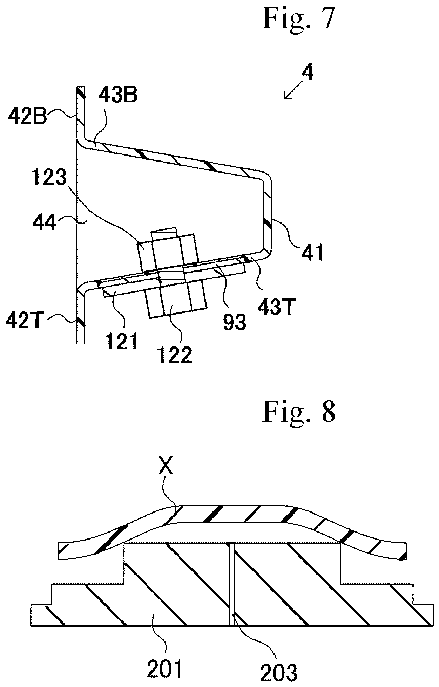

FIG. 7 is a cross-sectional view showing a state in which a bracket 121 is attached to the vehicle inner side of the lower half portion 4 in FIG. 6. As shown in FIG. 7, a bolt 122 is inserted through the metal fitting 93 and the bracket 121, and a nut 123 is fastened to the bolt 122, so that the bracket 121 is attached to the lower half portion 4. By attaching the trunk lock 8 to the bracket 121, the trunk lock 8 can be attached to the door inner panel 1. As shown in FIG. 7, it is preferable that the bolt 122 be inserted into the bracket 121 and the metal fitting 93 from the inside of the vehicle and be fastened to the nut 123 on the outside of the vehicle.

Strength can be secured by using the metal fitting 93 in a portion to be connected to the trunk lock 8.

It is preferable that the bracket 121 be in surface contact with only the metal fitting 93 and not in contact with the resin panel. When only metals of the metal fitting 93 and the bracket 121 come into surface contact with each other, the stability of the fastening is improved. An area S1 of a contact surface of the bracket 121 with the metal fitting 93 is preferably smaller than an area S2 of a portion where the metal fitting 93 is exposed from the resin panel. When S1 < S2 is satisfied, the resin panel is not disposed between the metal fitting 93 and the bracket 121 even under surface contact of the metal fitting 93 embedded in the resin panel with the bracket 121, and the fastening strength can be stabilized.

It is preferable that a portion of the resin panel in contact with the metal fitting 93 be formed only from the molding material Y.

The resin panel of the door inner panel 1 may have an uneven thickness portion. That is, the resin panel may have an uneven thickness structure. For example, the thickness of the resin panel at portions corresponding to the hinge fastening portion 6, the damper fastening portion 7, and the trunk lock 8 may be larger than the thickness of the resin panel at other portions of the back door inner panel 1.

When the metal fittings 91 to 93 are used, the uneven thickness portion of the door inner panel is preferably within 30 mm from the metal fittings 91 to 93. In other words, the periphery of the metal fittings 91 to 93 may have an uneven thickness structure. When the metal fittings 91 to 93 are covered with the Y portion, it is preferable to provide an uneven thickness structure in which portions within 30 mm from the fittings 91 to 93 are thicker than the other portions due to the thickness of the X portion and the thickness of the Y portion. It is more preferable that the uneven thickness portion of the back door inner panel be within 20 mm from the metal fittings 91 to 93.

On the other hand, the uneven thickness portion may be present at a position more than 30 mm away from the metal fittings 91 to 93.

When the resin panel has an uneven thickness structure (a portion whose thickness is not constant), it is preferable that the Y portion contribute to the uneven thickness structure. This is because it is preferable that the composite material X for forming the X portion have a plate shape, and therefore it is preferable to form the Y portion that is not a plate from the injection-molding material Y. The use of the injection-molding material Y facilitates manufacturing the back door inner panel having an uneven thickness structure.

For example, in the case of manufacturing a door inner panel having an uneven thickness structure in which the thickness gradually increases from 2 mm to 3 mm, the uneven thickness structure can be formed by placing the composite material X having a thickness of 1 mm on a mold and inserting the injection-molding material Y at a remaining region of 1 mm to 2 mm.

When a sheet molding compound (sometimes referred to as SMC) containing reinforcing fibers is used as the composite material X and the composite material X is molded and at the same time, the metal fitting 91 is covered, the X portion can contribute to an uneven thickness structure.

Hereinafter, the composite material X and the injection-molded material Y will be described in more detail.

[Reinforcing Fibers]

In this description, the reinforcing fibers are preferably at least one selected from the group consisting of carbon fibers, aramid fibers, and glass fibers. More preferably, the reinforcing fibers are carbon fibers or glass fibers.

More specifically, the reinforcing fibers contained in the composite material X are preferably carbon fibers or glass fibers. The reinforcing fibers contained in the injection-molding material Y are preferably carbon fibers or glass fibers.

[Carbon fiber]

1. Carbon Fiber in General

As carbon fibers for use in the present invention, polyacrylonitrile (PAN)-based carbon fibers, petroleum/coal pitch-based carbon fibers, rayon-based carbon fibers, cellulose-based carbon fibers, lignin-based carbon fibers, phenol-based carbon fibers, and the like are generally known. In the present invention, any of these carbon fibers can be preferably used. Among them, polyacrylonitrile (PAN)-based carbon fibers are preferably used in the present invention because of their excellent tensile strength. Carbon fibers "Tenax" (registered trademark) STS40-24KS (mean fiber diameter: 7 $\mu$ m) manufactured by Teijin Limited can be used as the PAN-based carbon fibers, for example.

2. Sizing Agent for Carbon Fiber

The carbon fiber used in the present invention may have a sizing agent attached to a surface thereof. When carbon fibers having a sizing agent attached are used, the type of the sizing agent can be appropriately selected according to the type of the carbon fibers and the type of the resin used in the composite material X or the injection-molding material Y, and is not particularly limited.

[Glass Fiber]

A case in which the reinforcing fibers used in the present invention are glass fibers will be described.

1. General Glass Fiber

The glass fibers used in the present invention may be any glass fibers commonly referred to as glass fibers. Glass compositions such as A glass, C glass, and E glass defined in JIS R3140:2006 are not particularly limited, and may optionally contain components such as $TiO_2$, $SO_3$, and $P_2O_5$. As the glass fibers, for example, glass fibers E-glass RS240QR-483 (count: 2400 g/1000 m) manufactured by Nitto Boseki Co., Ltd., can be used.

2. Sizing Agent for Glass Fibers

The glass fibers used in the present invention may have a sizing agent attached to a surface thereof. When glass fibers having a sizing agent attached are used, the type of the sizing agent can be appropriately selected according to the type of the glass fibers and the type of the resin, and is not particularly limited. The glass fibers that are treated in advance with a conventionally known coupling agent, such as an organosilane-based compound, an organic titanium-based compound, an organoborane-based compound, and an epoxy-based compound, can be preferably used.

[Dispersion in In-Plane Direction]

The reinforcing fibers contained in the composite material X of the present invention are dispersed in the in-plane direction.
Dispersing the reinforcing fibers in the in-plane direction means dispersing with the fiber axes of the reinforcing fibers being in the in-plane direction. The angle between the fiber axes of the reinforcing fibers and the in-plane direction is preferably 45° or less.

1. In-Plane Direction

The composite material X is preferably a plate-shaped material. The in-plane direction is any direction parallel to a plane orthogonal to a plate thickness direction of the composite material X.

2. Random Distribution in Two-Dimensional Direction

It is preferable that the reinforcing fibers be randomly dispersed in a two-dimensional direction of the in-plane direction of the composite material X. In the case of press-molding the composite material X without flowing, the form of the reinforcing fibers is substantially maintained before and after molding. Therefore, it is preferable that the reinforcing fibers contained in the X portion of the door inner panel (molded body) in which the molding material is molded be also two-dimensionally and randomly dispersed in the in-plane direction.
Here, the "two-dimensionally and randomly dispersed" refers to a state in which the reinforcing fibers are oriented in a disordered manner, but not oriented in a specific direction such as one direction in the in-plane direction of the composite material X or the X portion, and are arranged in the sheet surface without exhibiting a specific directivity as a whole. The composite material X (or the X portion of the molded body) obtained by using discontinuous fibers dispersed two-dimensionally and randomly has no in-plane anisotropy, and is substantially isotropic.
A degree of the two-dimensional random orientation is evaluated by determining a ratio of tensile moduli in two directions orthogonal to each other. When a ratio ($E\delta$) obtained by dividing a larger value of the measured values of the tensile elastic modulus by a smaller value is 5 or less, more preferably 2 or less, and still more preferably 1.5 or less in any direction of the composite material (or the X portion of the molded body) and a direction orthogonal thereto, it can be evaluated that the reinforcing fibers are dispersed two-dimensionally and randomly. Since the X portion of the door inner panel 1 has a curved surface, it is preferable to heat the door inner panel 1 to a softening temperature or higher, return the door inner panel 1 to a flat plate shape, and to extract only the X portion, followed by solidification, in a method of evaluating the two-dimensional random distribution in the in-plane direction. After that, when a test piece is cut out from the X portion returned to the flat plate shape and the tensile elastic modulus is obtained, a random distribution state in a two-dimensional direction can be confirmed.

[Fiber Length of Reinforcing Fibers contained in X Portion]

The composite material X preferably contains reinforcing fibers A having a weight average fiber length LwA.

Since the weight average fiber length of the composite material X does not change before and after molding, examining the weight average fiber length of the reinforcing fibers contained in the X portion shows the weight average fiber length LwA of the reinforcing fibers contained in the composite material X.

The weight average fiber length of the reinforcing fibers A contained in the X portion is more preferably 1 mm or more, and more preferably 3 mm or more. The weight average fiber length of the reinforcing fibers A contained in the X portion is more preferably 3 mm or more and 100 mm or less. The weight average fiber length LwA of the reinforcing fibers A is more preferably 3 mm or more and 80 mm or less, and further preferably 5 mm or more and 60 mm or less. When LwA is 100 mm or less, the fluidity of the material is less likely to be decreased in manufacturing by press-molding of the composite material X, and a fiber-reinforced resin member having a desired shape is easily formed. When LwA is 1 mm or more, the mechanical strength of the obtained fiber-reinforced resin member is less likely to be decreased, which is preferable.

The weight average fiber length and the number average fiber length of the reinforcing fibers are determined by the following formulae (1) and (2).

[Fiber Length of Reinforcing Fibers contained in Y Portion]

It is preferable that the injection-molding material Y contain reinforcing fibers B having a weight average fiber length LwB and LwB be lower than LwA. Accordingly, the mechanical strength of the reinforcing portion formed from the composite material X can be higher than the mechanical strength of the main body formed from the injection-molding material Y. The composite material X forms both side frames extending in the vertical direction of the window opening. Each region of this side frames is generally narrower than the other portions, and requires a higher strength than the other portions (for example, a portion formed from only the injection-molding material Y).

In [Step (3): step of injecting injection-molding material Y into mold] described later, the injection-molding material Y is one immediately before injection, and when a kneading step is performed before injection, the injection-molding material Y before kneading is called an injection-molding material Y. Since the weight average fiber length does not change before and after kneading, the weight average fiber length LwB of the reinforcing fibers contained in the injection-molding material Y is seen by examining the weight average fiber length of the reinforcing fibers contained in the Y portion.

The weight average fiber length LwB of the reinforcing fibers B is preferably less than 3 mm. The weight average fiber length LwB is more preferably 0.01 mm or more and less than 3 mm. The lower limit is preferably 0.01 mm or more, more preferably 0.05 mm or more, and even more preferably 0.1 mm or more. When the weight average fiber length LwB is 0.01 mm or more, the mechanical strength is ensured. On the other hand, the upper limit of the weight average fiber length LwB is preferably less than 3 mm, more preferably less than 2 mm, and still more preferably less than 1 mm. When the weight average fiber length LwB is 1.0 mm or less, it is easy to manufacture the injection-molding material Y by kneading. When the injection-molding material is injected, the weight average fiber length of the reinforcing fibers in the injection-molding material subjected to a sufficient kneading step is generally less than 1 mm.

The weight average fiber length and the number average fiber length of the reinforcing fibers are determined by the following formulae (1) and (2).

[Number Average Fiber Length Ln and Weight Average Fiber Length Lw]

The number average fiber length Ln and the weight average fiber length Lw are determined by the following formulae (1) and (2), where the fiber length of each of the reinforcing fibers is represented by Li. The unit of the number average fiber length Ln and the weight average fiber length Lw is mm.

[Mathematical formula 1]

$$Ln = \sum_{i=1}^{I} \frac{L_i}{I} \quad \ldots \text{formula (1)}$$

$$Lw = \left( \sum_{i=1}^{I} L_i^{\,2} \right) \Big/ \left( \sum_{i=1}^{I} L_i \right) \quad \ldots \text{formula (2)}$$

In the formula, "I" represents the number of measured reinforcing fibers. When the fiber length is constant, the number average fiber length and the weight average fiber length have the same value. The reinforcing fibers can be extracted from the door inner panel, for example, by heat-treating the door inner panel at 500° C for about 1 hour and removing the resin in a furnace.

The number average fiber length Ln and the weight average fiber length Lw can be obtained, for example, by measuring the fiber lengths $L_1$ to $L_{100}$ of 100 (I=100) fibers randomly extracted from the door inner panel in units of 1 mm using a vernier caliper, followed by calculation based on the following formulae (1) and (2).

When short fibers which are unmeasurable using a vernier caliper are contained, it is preferable to add the reinforcing fibers obtained after removing the resin to water containing a surfactant, sufficiently stir the mixture by ultrasonic vibration, randomly collect the stirred dispersion of the reinforcing fibers with a measuring spoon to obtain an evaluation sample, and measure the length of 3000 (I=3000) reinforcing fibers with an image analyzer Luzex AP manufactured by Nireco Corporation. Using the measured values $L_1$ to $L_{3000}$ of the fiber lengths, the number average fiber length Ln and the weight average fiber length Lw can be determined similarly as in the above formulae (1) and (2).

[Volume Fraction of Reinforcing Fibers in X Portion or Y Portion]

For each of the X portion and the Y portion, a reinforcing fiber volume fraction (Vf) can be determined by the following equation (3).

The reinforcing fiber volume fraction is not particularly limited, but the reinforcing fiber volume fraction (Vf) is preferably 10 vol% to 60 vol%, more preferably 20 vol% to 50 vol%, and still more preferably 25 vol% to 45 vol%.

Reinforcing fiber volume fraction (Vf) = 100 × reinforcing fiber volume/(reinforcing fiber volume + resin volume)      Formula (3)

In the present invention, it is preferable in a manufacturing process that a reinforcing fiber volume fraction Vfb of the Y portion and the carbon fiber volume fraction Vfa of the X portion satisfy a relationship Vfa ≥ Vfb. For example, Vfa > Vfb is often satisfied when a material obtained by crushing an offcut recovered in a manufacturing process or from a product is used as the injection-molding material Y, or when a material obtained by crushing the offcut and further adding a thermoplastic resin is used as the injection molding material Y to manufacture the Y portion. That is, if the manufacturing method such that Vfa ≥ Vfb is adopted, the offcut remained after cutting out the X portion can be efficiently used, and the material is easily recycled.

Vfa is preferably 20 Vol% to 45 Vol%, and more preferably 25 Vol% to 40 Vol%.

Vfb is preferably 1 Vol% to 40 Vol%, more preferably 5 Vol% to 30 Vol%, and still more preferably 10 Vol% to 25 Vol%.

[Analysis of Volume fraction (Vf) of Reinforcing Fibers]

The analysis of the volume fraction of the reinforcing fibers is not limited, but it is preferable to measure the volume fraction as follows.

A sample is cut out from the X portion or the Y portion, the resin is removed by burning at 500° C for 1 hour in a furnace, the mass of the sample is weighed before and after the treatment, and the masses of the reinforcing fibers and the resin are calculated. Next, the volume fraction of the reinforcing fibers and the resin is calculated using the specific gravity of each component.

Vf = 100 × Volume of reinforcing fibers/(Volume of reinforcing fibers + Volume of resin)

[Resin]

The matrix resin contained in the composite material X and the resin contained in the injection-molding material Y may be thermosetting or thermoplastic.

1. Thermoplastic Resin

1.1. Overview

When the used resin is a thermoplastic resin, the type thereof is not particularly limited, and one having a desired softening point or melting point can be appropriately selected and used. As the thermoplastic resin, a thermoplastic resin having a softening point in a range of 180° C to 350° C is generally used, but the thermoplastic resin is not limited thereto.

Examples of the thermoplastic resin include a polyolefin resin, a polystyrene resin, a polyamide resin, a polyester resin, a polyacetal resin (polyoxymethylene resin), a polycarbonate resin, a (meth) acrylic resin, a polyarylate resin, a polyphenylene ether resin, a polyimide resin, a polyether nitrile resin, a phenoxy resin, a polyphenylene sulfide resin, a polysulfone resin, a polyketone resin, a polyetherketone resin, a thermoplastic urethane resin fluorine-based resin, a thermoplastic polybenzimidazole resin, and the like.

The thermoplastic resin used in the resin panel of the door inner panel 1 of the present invention may be only one type or two or more types. Example of a mode in which two or more types of thermoplastic resins are used in combination include, but not limited to, a mode in which thermoplastic resins having different softening points or melting points are used in combination, and a mode in which thermoplastic resins having different average molecular weights are used in combination.

When the thermoplastic resin is used, a polyolefin resin is preferably used, and a polypropylene resin is more preferably used.

1.2. Resins in Composite Material X and Injection-Molding Material Y

The resin contained in the injection-molding material Y is preferably a thermoplastic resin. When the resin contained in the X portion is the thermoplastic resin, it is more preferable that the resin contained in the composite material X and the resin contained in the injection-molding material Y be the same type of thermoplastic resin.

2 Thermosetting Resin

The resin contained in the composite material X may be a thermosetting resin. In this case, for the composite material X, a sheet molding compound containing the reinforcing fibers may be used. Due to its high formability, the sheet molding compound can be easily molded even into complex shapes. The sheet molding compounds have higher fluidity and formability than continuous fibers, and ribs and bosses can be easily formed.

[Other agents]

The resin used in the composite material X or the injection-molding material Y may contain: various fibrous fillers of organic fibers or inorganic fibers or non-fibrous fillers; and additives such as flame retardants, UV-resistant agents, stabilizers, release agents, pigments, softeners, plasticizers, and surfactants within a range not impairing the object of the present invention.

[Preferred combination of resin and fibers]

[Fibers]

It is preferable that the reinforcing fibers A contained in the composite material X be glass fibers and/or carbon fibers and the reinforcing fibers B contained in the injection-molding material Y be glass fibers.

As the reinforcing fibers A contained in the composite material X, carbon fibers can be partially used, and glass fibers can be used for a portion other than the portion in which the carbon fibers are used. A location where the carbon fibers are partially used is preferably a periphery of the hole Xa described later, and the carbon fibers are preferably used for reinforcing fastening.

[Resin]

The resin contained in the composite material X may be a thermoplastic resin or a thermosetting resin, and the resin contained in the injection-molding material Y may be a thermoplastic resin or a thermosetting resin. The injection-molding material Y may contain a thermoplastic resin, while a thermosetting sheet molding compound may be used for the composite material X.

It is preferable that the volume Va of the composite material X used and the volume Vb of the injection-molding material Y used satisfy a relationship of $Vb \geq Va$. Va:Vb is preferably 10:90 to 50:50, and more preferably 20:80 to 40:60.

When Va:Vb is 10:90 to 50:50, the door inner panel 1 can be formed using the composite material X for the side frames 3L and 3R extending in the vertical direction of the window opening 5, and using the injection-molding material Y having a high fluidity for the remainder.

[X Portion and Y Portion]

After molding, it is preferable that the composite material X form the X portion. Similarly, after molding, it is preferable that the injection-molding material Y form the Y portion.

[Side Frame]

1. Aspect 1

The door inner panel 1 of the present invention has a skin layer that is on the outside of the vehicle and a skin layer that is on the outside of the vehicle. Here, the skin layers are a layer formed by bringing a molding material (the composite material X and the injection-molding material Y) into contact with a cavity wall surface of a mold resulting in cooling and solidification.

It is preferable that both the side frames 3L and 3R have the X portion in at least a portion of one of the skin layers.

Since the composite material X contains the reinforcing fibers dispersed in the in-plane direction, the reinforcing fibers dispersed in the in-plane direction are observed when the composite material X becomes the X portion, which is beautiful as a design surface.

It is more preferable that a skin layer having the X portion be provided on a surface of the door inner panel 1 on the inside of the vehicle. It is further preferable that the surface of each of the side frames 3L and 3R extending in the vertical direction of the window opening 5 that is on the inside of the vehicle become an interior design portion of the vehicle. It is even more preferable that the grain shape provided on the cavity inner wall surface of a movable mold or a fixed mold be transferred to the interior design portion. A surface that is formed from the Y portions except the surfaces of the side frames 3L and 3R on the inside of the vehicle, among the surfaces of the door inner panel 1 on the inside of the vehicle, may be covered with an interior panel.

The skin layer on one surface in which the X portion is observed may be a surface of the door inner panel 1 on the outside of the vehicle. In this case, most of the skin layer of the door inner panel 1 on the inside of the vehicle is the Y portion, and therefore a sense of uniformity can be imparted to an appearance of the door inner panel 1 viewed from the inside of the vehicle.

[Manufacturing Method]

Next, a method of manufacturing the door inner panel 1 will be described. In this embodiment, the door inner panel 1 is manufactured by using the plate-shaped composite material X and pouring and extending the injection-molding material Y in the in-plane direction of the composite material X.

A method of manufacturing the door inner panel 1 by press-molding includes the following steps (1) to (4):

(1) placing the composite material X in a cavity of a fixed mold;
(2) bringing a movable mold closer to the fixed mold to bring the movable mold into contact with the composite material X;
(3) injecting the injection-molding material Y into the mold; and
(4) pressing the composite material X and the injection-molding material Y in the mold to integrally mold the door inner panel 1.

When the resin contained in the composite material X and the resin contained in the injection-molding material Y are a thermoplastic resin, cold press-molding is preferably used.

Although cold press-molding is mainly described below, the composite material X and the injection-molding material Y may be integrally molded by hot press-molding.

A method of manufacturing the door inner panel 1 by cold press-molding includes the following steps (0) to (4):

(0) heating the composite material X to a first predetermined temperature;
(1) placing the composite material X in a cavity of a fixed mold;
(2) bringing a movable mold closer to the fixed mold to bring the movable mold into contact with the composite material X;
(3) injecting the injection-molding material Y into the mold; and
(4) pressing the composite material X and the injection-molding material Y in the mold to integrally mold the door inner panel 1.

(0) Step of Heating Composite Material X to First Predetermined Temperature

It is preferable that the composite material X be heated to the first predetermined temperature in advance. When the thermoplastic resin contained in the composite material X is crystalline, the first predetermined temperature is equal to or higher than the melting point of the thermoplastic resin and equal to or lower than the decomposition temperature thereof. When the thermoplastic resin contained in the composite material X is amorphous, the first predetermined temperature is equal to or higher than the glass transition temperature of the thermoplastic resin and equal to or lower than the decomposition temperature thereof.

(1) Step of Placing Composite Material X in Cavity of Fixed Mold

As shown in FIG. 8, the composite material X is placed on a fixed mold 201. When the door inner panel is a back door inner panel, at least one composite material X is placed at a position corresponding to each of the side frames 3L and 3R.

The step of placing the composite material X on the fixed mold can be performed by a conventionally known method.

The composite material X may be pre-shaped along the mold and placed on the fixed mold.

In the case of cold press-molding, the temperature of the fixed mold 201 is adjusted to a second predetermined temperature. When the thermoplastic resin contained in the composite material X is crystalline, the second predetermined temperature is lower than the melting point of the thermoplastic resin. When the thermoplastic resin contained in the composite material X is amorphous, the second predetermined temperature is lower than the glass transition temperature of the thermoplastic resin.

As described above, cold pressing can be suitably performed by adjusting the temperatures of the composite material X and the mold.

(2) Step of Bringing Movable Mold Closer to Fixed Mold to Bring Movable Mold into Contact with Composite Material X

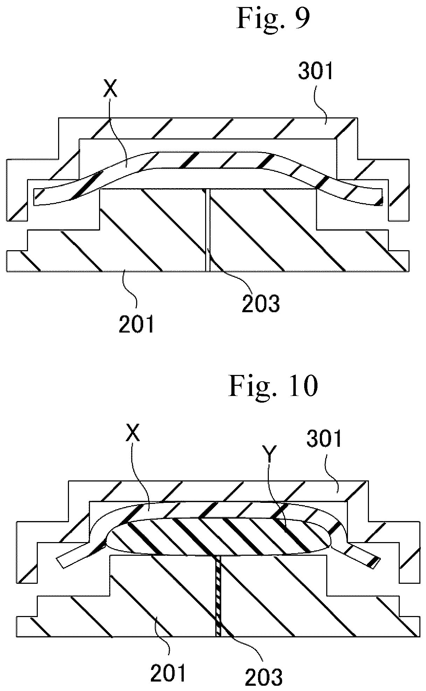

Next, as shown in FIG. 9, a movable mold 301 is brought closer to the fixed mold 201, and the movable mold 301 is brought into contact with the composite material X.

(3) Step of Injecting Injection-Molding Material Y into Mold

Next, as shown in FIG. 10, the injection-molding material Y is injected into the mold from a gate 203 provided in the fixed mold 201. The timing of injecting the injection-molding material Y may be immediately before or immediately after a pressure starts to be applied to a part of the composite material X by the movable mold 301.

In order to prevent positional deviation of the composite material X in the mold, it is preferable to inject the injection-molding material Y immediately after the composite material X comes into contact with at least a part of the composite material X and the pressure starts to be applied. A method of injecting the injection-molding material Y into the mold is not particularly limited, and can be performed by a conventionally known method.

At this time, the composite material X is pressed against the movable mold 301 due to the pressure of the injection-molding material Y.

It is preferable that the injection-molding material Y be kneaded, and a clearance be provided between the fixed mold 201 and the movable mold 301 and filled with the injection material. By pressing the injection-molding material Y after the mold is filled with the injection-molding material Y, the positional deviation of the composite material X can be prevented.

When the thermoplastic resin contained in the injection-molding material Y is crystalline, it is preferable that the injection-molding material Y when being charged into the mold be heated to a temperature that is equal to or higher than the melting point of the thermoplastic resin and equal to or lower than the decomposition temperature thereof, and when the thermoplastic resin is amorphous, it is preferable that the injection-molding material Y be heated to a temperature that is equal to higher than the glass transition temperature of the thermoplastic resin and equal to or lower than the decomposition temperature thereof.

In order to provide the clearance between the fixed mold 201 and the movable mold 301 and fill the clearance with the injection-molding material Y, it is only necessary to stop the movable mold 301 from being brought closer to the fixed mold 201 once before the mold is completely closed. The position where the movable mold is stopped is preferably after the movable mold 301 comes into contact with the composite material X. By bringing the composite material X into contact with the movable mold 301 to suppress the movement of the composite material X, the positional deviation of the composite material X can be prevented during pressing.

(4) Step of Pressing Composite Material X and Injection-Molding Material Y in Mold to Integrally Mold Door Inner Panel 1

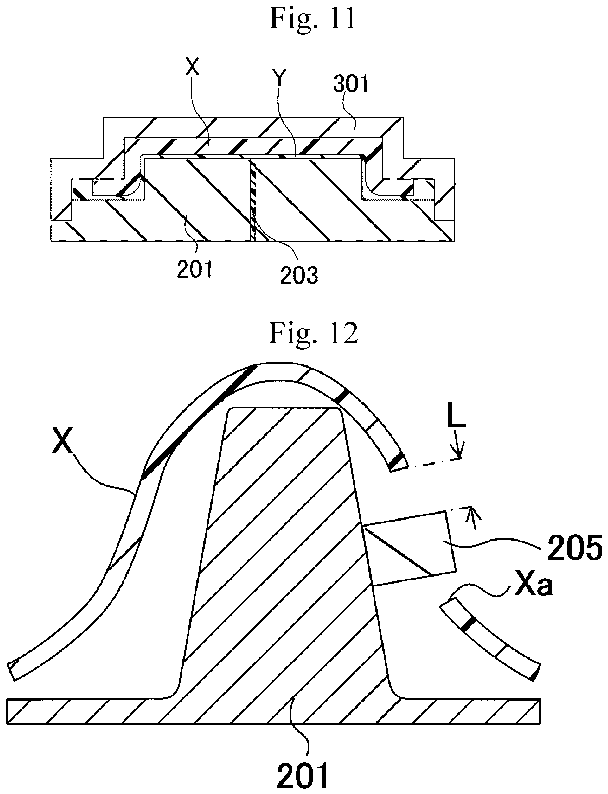

Next, as shown in FIG. 11, the composite material X and the injection-molding material Y are pressed in the mold and integrally molded. The molding pressure is not particularly limited, but is preferably less than 20 MPa, and more preferably 10 MPa or less, with respect to the projected area of the cavity of the mold.

At this time, the composite material X is cooled by contact with the cavity wall surface of the movable mold 301, and therefore the X portion in which the composite material X is solidified forms a part of the skin layer. When a grain shape is provided on the cavity wall surface of the fixed mold 201 or the movable mold 301, the grain shape is transferred to the skin layer of the door inner panel 1. After molding, the composite material X forms the X portion, the injection-molding material Y forms the Y portion, and the X portion and the Y portion constitute the door inner panel 1.

After that, the integrally molded door inner panel 1 is taken out from the mold.

As described above, since the X portion and the Y portion are integrally molded, the joining strength of the X portion and the Y portion is excellent.

In addition, since the injection-molding material Y that easily flows is injected and pressed in a state in which the plate-shaped composite material X is disposed in the mold, a door inner panel having a complicated shape including a rib and a boss can be manufactured.

Various steps may be added during the steps (0) to (4).

Further, the aforementioned steps are performed by vacuum press-molding that is performed under vacuum.

Although the method of manufacturing the door inner panel 1 by cold press-molding has been described above, the door inner panel 1 may be manufactured by hot press-molding. In this case, the step (0) is unnecessary. For example, in the case of using a thermosetting sheet molding compound (SMC) as the composite material X, the mold may be set to the curing temperature of SMC.

[Insert Molding]

By placing the metal fittings 91 to 93 in advance in the mold in addition to the composite material X, injecting the injection-molding material Y into the mold, and pressing them, the door inner panel in which the metal fittings are integrated by one molding process can be manufactured, and the productivity is excellent.

In the case of insert-molding the metal fittings 91 to 93, it is preferable to place the metal fittings 91 to 93 in advance in the fixed mold before the step (2) and fix the metal fittings to the fixed mold 201 so as not to be moved in the pressing step. It is preferable to create design in which the metal fittings 91 to 93 are clamped in advance on the fixed mold 201 and the molded body (door inner panel) is detached from the mold using a slide core at the same time as the completion of molding.

[Positions where Metal Fittings are Placed]

At least one of the metal fittings 91 to 93 is preferably covered with the Y portion. For example, when the metal fittings 91 to 93 are arranged in advance in the mold, the injection-molding material Y is injected into the mold and charged into the mold to cover the metal fittings 91 to 93 with the injection-molding material Y, the metal fittings 91 to 93 are covered with the Y portion after molding. At this time, the X portion is integrally molded with the metal fittings 91 to 93 via the Y portion.

It is preferable that the X portion be not in contact with at least one of the metal fittings 91 to 93. For example, when insert molding is performed, the composite material X and the metal fittings 91 to 93 may be placed in advance in the mold so as not to come into contact with each other, and the injection-molding material Y may be then injected into the mold and charged into the mold. By injecting the injection-molding material Y, the metal fittings 91 to 93 are covered with the Y portion. This manufacturing method leads to a reduction in the number of manufacturing steps. Further, by design in which the metal fittings 91 to 93 are covered with the Y portion and are not in contact with the X portion, a weld caused by the contact between the composite material X and the injection-molding material Y is not present around a metal fastener. That is, it is more preferable that the metal fittings 91 to 93 be covered with the Y portion, and there be no weld caused by the Y portion on the contact surface between the Y portion and the metal fittings 91 to 93. When the X portion is not in contact with the metal fittings 91 to 93, it is preferable that the X portion be in contact with the Y portion.

As described in FIGS. 2, 4, and 6, when the bolt insertion holes 91a to 93a are provided in the metal fittings 91 to 93, it is preferable to provide the holes 23a, 33a, and 43a at positions corresponding to the bolt insertion holes 91a to 93a of the resin panel in which the metal fittings 91 to 93 are insert-molded.

When the holes 23a, 33a, and 43a are provided in the X portion, the hole Xa may be provided in advance at a position corresponding to the holes 23a, 33a, and 43a of the composite material X before the step (1). The holes 23a, 33a, and 43a can be formed in the X portion by providing the hole-forming member at a position corresponding to the hole Xa of the composite material X of the mold, inserting the hole-forming member into the hole Xa of the composite material X, and completing the molding of the composite material X.

In order to prevent the positional deviation of the composite material X at the time of molding, it is preferable that a hole-forming member for forming the hole Xa in the composite material X be provided in at least one of the fixed mold or the movable mold, the hole Xa be provided in the composite material X in a step before the step (1), and the composite material X be placed in the mold with the hole-forming member being inserted into the hole Xa in the step (1).

For example, in step (1), as shown in FIG. 12, a hole-forming member 205 is provided in the fixed mold 201, and the composite material X is placed on an upper portion of the fixed mold 201 with the hole-forming member 205 being inserted into the hole Xa. The hole-forming member 205 is provided by placing a pin in the fixed mold 201, and may be called a core pin. The projected area of the hole Xa is larger than that of the hole-forming member 205.

After that, by performing the steps (2) to (4), the door inner panel 1 can be molded while the positional deviation of the composite material X during molding is prevented.

Holes other than the holes 23a, 33a, and 43a corresponding to the bolt insertion holes 91a to 93a may be provided as the holes Xa provided in the composite material X.

When the hole Xa is sufficiently large, the injection-molding material Y passes through the hole Xa. Therefore, when the skin layer having the Y portion is provided on both surfaces of the door inner panel 1, it is preferable that the hole Xa be sufficiently large.

The mold including the hole-forming member 205 may be any of male and female molds. However, when the composite material X in a softened state under preheating is used, the hole-forming member is preferably provided in a mold in which the composite material X is placed for easy supply of the composite material X. In some cases, the hole-forming member may be provided in both the male and female molds such that the tip end surfaces of the hole-forming members are in contact with each other during mold clamping.

When the composite material X having a thickness t is placed in the fixed mold 201, it is preferable that an average distance Lf between the inner wall surface of the hole Xa of the composite material X and the hole-forming member 205 be $0 < Lf < 10t$. This means that the flowing distance of the composite material X can be increased when the thickness t of the composite material X is large. For example, when the thickness of the composite material X is 2.5 mm, the average distance Lf may be set to $0 < Lf < 25$ mm. As indicated in FIG. 12, for example, the distance between the inner wall surface of the hole Xa of the composite material X and the hole-forming member is a distance L between the inner wall surface of the hole Xa and the hole-forming member 205, and an average distance Lf of the distance is the average of L even when the shapes of the hole-forming member 205 and the hole Xa are irregular or there is a deviation at a place where the hole Xa is arranged.

It is more preferable to provide the hole Xa at a position disposed at an upper portion of the side frames 3L and 3R of the composite material X and a position disposed at a lower portion thereof. It is preferable that two or more locations for forming the holes Xa be provided for one composite material X. By providing the holes Xa at two or more locations of the composite material X, the positional deviation of the composite material X can be suitably prevented.

For example, the hole Xa may be provided at positions corresponding to the holes 23a and 33a. Here, the hole 23a is provided at a position disposed at the upper portion of the side frames 3L and 3R, and the hole 33a is provided at a position disposed at the lower portion thereof. Alternatively, the hole Xa may be provided at a different position that does not correspond to the holes 23a and 33a.

On the other hand, a hole may be provided in the Y portion to form the holes 23a, 33a, and 43a provided in the door inner panel 1. In the case of insert molding in which the injection-molding material Y is injected into the mold and charged into the mold, if the hole-forming member is designed in advance to be provided in the mold, the holes 23a, 33a, and 43a can be formed in the Y portion when the injection-molding material Y is poured and the molding is completed.

Holes corresponding to the holes 23a, 33a, and 43a may be provided in both the X portion and the Y portion, or holes may be provided in both the X portion and the Y portion at positions that do not correspond to the holes 23a, 33a, and 43a.

Since the holes 23a, 33a, and 43a are provided at the same time as the X portion and the Y portion are integrally molded, the holes 23a, 33a, and 43a can be easily provided. By providing the holes 23a, 33a, and 43a by integral molding, the manufacturing process can be simplified.

After the completion of the press-molding in (4), the holes 23a, 33a, and 43a may be provided by secondary processing.

[Position of Gate]

In order to manufacture the door inner panel 1 in which the X portion is observed in at least a part of the skin layer, it is preferable to provide a gate for injecting the injection-molding material Y in a region where the composite material X is placed. In FIGS. 8 to 11, an example has been described in which the gate 203 is provided at a position where the composite material X of the fixed mold 201 is placed, but a gate for injecting the injection-molding material Y may be provided at a position where the composite material X of the movable mold 301 is placed. In this case, the composite material X is pressed against the fixed mold 201 due to the pressure of the molding material Y. Since a space between the composite material X and the cavity wall surface of the movable mold is closed, the injection-molding material Y can be prevented from entering the space between the composite material X and the cavity wall surface of the movable mold.

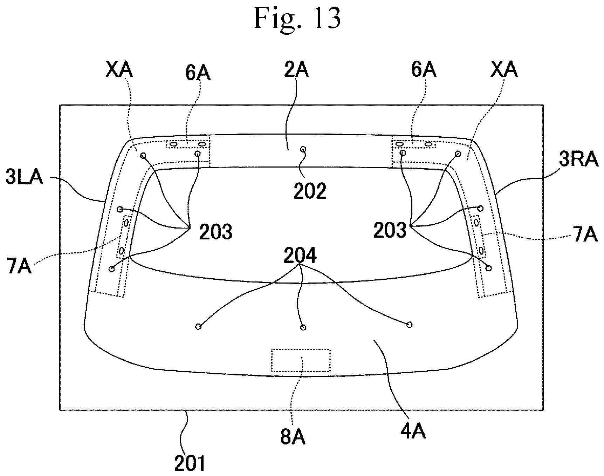

FIG. 13 is a plan view of the fixed mold 201. As shown in FIG. 13, there are a region 2A corresponding to the shape of the beam portion 2, a region 3LA corresponding to the shape of the side frame 3L, a region 3RA corresponding to the shape of the side frame 3R, and a region 4A corresponding to the shape of the lower half portion 4 on an upper surface of the fixed mold 201. Note that dashed lines indicate a region XA corresponding to the composite material X, a region 6A corresponding to the hinge fastening portion 6, a region 7A corresponding to the damper fastening portion 7, and a region 8A corresponding to a region in which the trunk lock 8 is disposed.

A position where a gate for injecting the injection-molding material Y is provided is not particularly limited. For example, the gate for injecting the injection-molding material Y may be provided in regions (2A and 4A) other than the region XA where the composite material X is placed.

[Number of Gates]

In order to manufacture the door inner panel 1 in which the X portion is observed in at least a part of the skin layer, it is preferable that the number of gates satisfy $n1 > n2 \geq 0$. Here,

n1 is the number of a first gate provided in the region (XA) where the composite material X is placed in a plan view of the cavity of the mold; and
n2 is the number of a second gate provided in a region other than the region where the composite material X is placed in plan view of the cavity of the mold.

For example, in the example shown in FIG. 13, one gate 202 is provided in the region 2A, eight gates 203 are provided in the region XA, and three gates 204 are provided in the region 4A. The gates 203 are a first gate provided in the region XA, and the gates 202 and 204 are a second gate provided in the region other than the region XA. In this case, $n1 = 8$ and $n2 = 4$, and $n1 > n2 \geq 0$ is satisfied.

As described above, in the case where $n1 > n2 \geq 0$ is satisfied, the injection-molding material Y injected from the gates 203 presses the composite material X against the inner wall of the cavity of the movable mold, the injection-molding material Y also spreads in the region other than the region XA, and therefore the injection-molding material Y injected from the gates 202 and 204 can be prevented from entering the space between the composite material X and the cavity wall surface of the movable mold.

In FIG. 13, the case has been described in which the gates 202 to 204 for injecting the injection-molding material Y are provided in the fixed mold 201, but the gate for injecting the injection-molding material Y may be provided in the movable mold 301. Even in this case, since the space between the composite material X and the cavity wall surface of the fixed mold 201 is closed by satisfying $n1 > n2 \geq 0$, the injection-molding material Y can be prevented from entering the space between the composite material X and the cavity wall surface of the fixed mold 201.

[Amount Discharged from Gate]

In order to manufacture both side frames in which the X portion is observed in at least a part of the skin layer on one surface, it is preferable that the amount of the injection-molding material Y discharged from the gate for injecting the injection-molding material Y satisfy $V1 > V2 \geq 0$. Here,

V1 is the amount of the injection-molding material Y discharged from the first gate (203) provided in the region (XA) where the composite material X is placed in a plan view of the cavity of the mold; and

V2 is the amount of the injection-molding material Y discharged from the second gate (202 and 204) provided in the region (2A and 4A) other than the region where the composite material X is placed in plan view of the cavity of the mold.

For example, in the example shown in FIG. 13, one gate 202 is provided in the region 2A, eight gates 203 are provided in the region XA, and three gates are provided in the region 4A. At this time, it is preferable to satisfy $V1 > V2 \geq 0$, where V1 is the total amount of the injection-molding material Y discharged from the gates 203 and V2 is the total amount of the injection-molding material Y discharged from the gates 202 and 204. The injection-molding material Y injected from the gates 203 presses the composite material X against the inner wall of the cavity of the movable mold, and the injection-molding material Y further spreads in the region other than the region XA. Since the discharge amount V1 of the injection-molding material Y injected from the gates 203 is larger than the discharge amount V2 of the injection-molding material Y injected from the gates 202 and 204, the injection-molding material Y injected from the gates 202 and 204 does not reach the composite material X and can be prevented from entering the space between the composite material X and the cavity wall surface of the movable mold.

[Second Embodiment]

Next, a second embodiment of the present invention will be described. Description of configurations similar to those in the first embodiment will be omitted.

In the second embodiment, the skin layers on both surfaces of the side frames 3LA and 3RA may include the Y portion in at least a part thereof. By forming the skin layer on the inside of the door inner panel 1 and the skin layer on the outside of the vehicle from the Y portion, a sense of unity can be imparted to an appearance of the door inner panel 1 viewed from the inside of the vehicle and an appearance of the door inner panel 1 viewed from the outside of the vehicle.

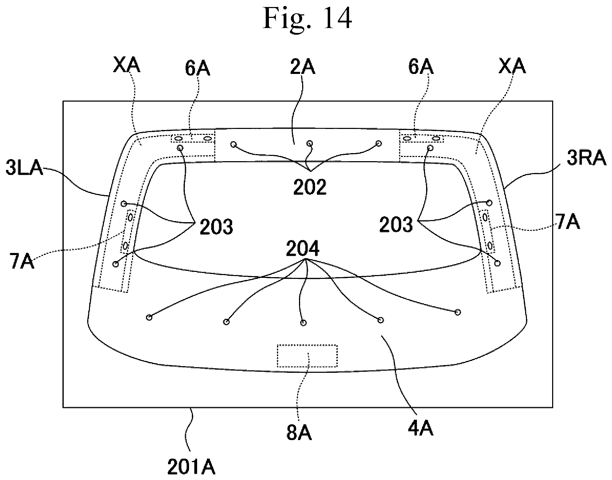

FIG. 14 is a plan view of a fixed mold 201A according to the second embodiment. Configurations similar to those in FIG. 13 will be represented by the same reference numerals as those in FIG. 13 and description thereof will be omitted.

[Number of Gates]

In order to form the skin layers including the Y portion in at least a part thereof on both surfaces of the side frames 3LA and 3RA, entry of the injection-molding material Y into the space between the composite material X and the cavity wall surface of the mold is needed.

In this case, it is preferable that the number of the gate for injecting the injection-molding material Y satisfy $0 < n1 < n2$. Here,

n1 is the number of a first gate provided in the region (XA) where the composite material X is placed in a plan view of the cavity of the mold; and

n2 is the number of a second gate provided in a region other than the region where the composite material X is placed in the plan view of the cavity of the mold.

For example, in the example shown in FIG. 14, three gates 202 are provided in the region 2A, six gates 203 are provided in the region XA, and five gates 204 are provided in the region 4A. The gates 203 are the first gate provided in the region XA, and the gates 202 and 204 are the second gate provided in the region other than the region XA. In this case, $n1 = 6$ and $n2 = 8$, and $0 < n1 < n2$ is satisfied.

When $0 < n1 < n2$ is satisfied, the injection-molding material Y injected from the gates 202 and 204 spreads to the region XA where the composite material X is placed, and therefore entry of the injection-molding material Y into a space between the composite material X and the cavity wall surface of the movable mold can be promoted.

[Amount Discharged from Gate]

In order to form the skin layers including the Y portion in at least a part thereof on both surfaces of the side frames 3LA and 3RA, it is preferable that the amount of the injection-molding material Y discharged from the gates satisfy $0 < V1 < V2$. Here,

V1 is the amount of the injection-molding material Y discharged from the first gate provided in the region (XA) where the composite material X is placed in a plan view of the cavity of the mold; and

V2 is the amount of the injection-molding material Y discharged from the second gate provided in the region other than the region (XA) where the composite material X is placed in plan view of the cavity of the mold.

For example, in the example shown in FIG. 14, three gates 202 are provided in the region 2A, six gates 203 are provided in the region XA, and five gates are provided in the region 4A. At this time, it is preferable to satisfy $0 < V1 < V2$, where V1 is the total amount of the injection-molding material Y discharged from the gates 203 and V2 is the total amount of the injection-molding material Y discharged from the gates 202 and 204. When $0 < V1 < V2$ is satisfied, the injection-molding material Y injected from the gates 202 and 204 spreads to the region XA where the composite material X is placed, and therefore entry of the injection-molding material Y into a space between the composite material X and the cavity wall surface of the movable mold can be promoted.

[Opening and Closing Direction of Mold]

1. Vertical Direction

In the present invention, the opening and closing direction of the mold is not particularly limited, but the fixed mold may be a lower mold, the movable mold may be an upper mold, and the mold may be opened and closed by moving the upper mold toward the lower mold upward and downward.

2. Horizontal Direction

On the other hand, the molded body may be manufactured by opening and closing the mold by moving the movable mold in a horizontal direction toward the fixed mold.

In the case of manufacturing the molded body by opening and closing the mold by moving the movable mold in the horizontal direction, it is preferable that there be at least two fixing members for fixing the composite material X to the fixed mold.

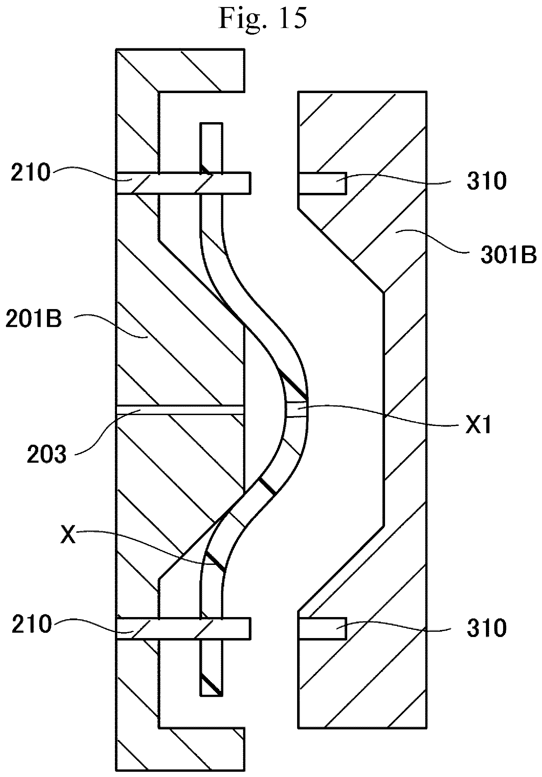

FIG. 15 is a horizontal cross-sectional view of a fixed mold 201B and a movable mold 301B provided so as to be openable and closable in the horizontal direction. In FIG. 15, a plurality of fixing members 210 for fixing the composite material X to the mold fixed mold 201B are provided. It is preferable that positions of the plurality of fixing members 210 be different in the horizontal direction. By providing the plurality of fixing members 210 at different positions in the horizontal direction of the fixed mold 201B, the positional deviation of the composite material X relative to the fixed mold 201B can be prevented. The fixing members 210 may be provided at different positions in the height direction. Three or more fixing members 210 may be provided at different positions in the height direction and the horizontal direction.

A hole 310 into which the fixing member 210 is inserted may be provided at a position opposite to the fixing member 210 in the movable mold 301B.

3. Fixed Mold and Movable Mold

The fixed mold may move depending on the mold. If the fixed mold moves, the mold with a relatively small moving distance is set as the fixed mold, and the mold with a relatively large moving distance is set as the movable mold.

[Pattern Cut]

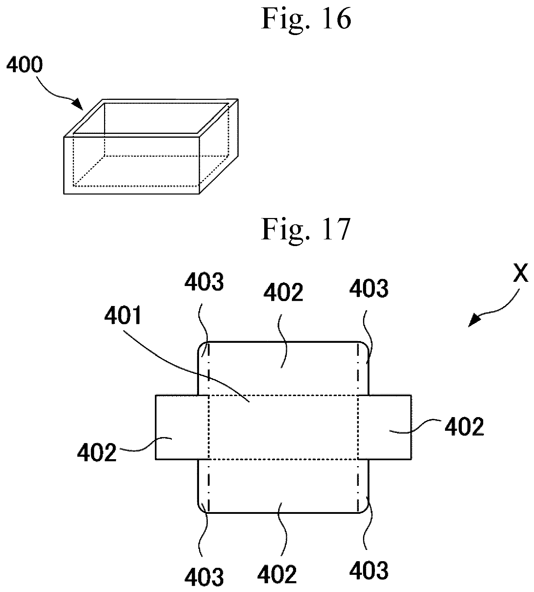

The composite material X may have a shape cut out by pattern cutting. The pattern cut refers to a process in which a composite material is cut into a desired shape in advance in accordance with the shape of the molded body. The shape is not a simple shape such as a square or a rectangle. For example, in the case of manufacturing a box-shaped molded body 400 as shown in FIG. 16, the composite material X may have a shape in which a margin is added to a portion of the box that constitutes an expanded view as shown in FIG. 17. In FIG. 17, four portions 402 that become side surfaces are provided around a portion 401 that becomes the bottom surface of the rectangular box, and a margin 403 is provided at a portion that is joined during molding of the portions 402 that become the adjacent side surfaces. In FIG. 17, the margin 403 is provided only on one of the portions 402 that become two adjacent side surfaces, but the margin 403 may be provided on both the portions 402.

When the resin contained in the composite material X is a thermoplastic resin and cold pressing is used as a molding method, it is particularly preferable that the composite material X have a shape cut out by pattern cutting. In the case of cold pressing, solidification of the resin is started at the moment when the fixed mold comes into contact with the composite material X, and therefore fluidity at the time of molding is lower than that of the thermosetting resin. Therefore, when the composite material is cut into a target shape in advance, the molded body having the target shape is easily formed. The pattern cut shape is preferably a shape developed by a computer through reverse molding analysis from a three-dimensional shape of the press-molded body to be manufactured.

[Pattern Cut and Fixing Member]

When the composite material X has a shape cut out by patterning cutting and the molded body is manufactured by opening and closing the mold by moving the movable mold in the horizontal direction toward the fixed mold, it is preferable to fix the composite material X by the plurality of fixing members provided in the fixed mold.

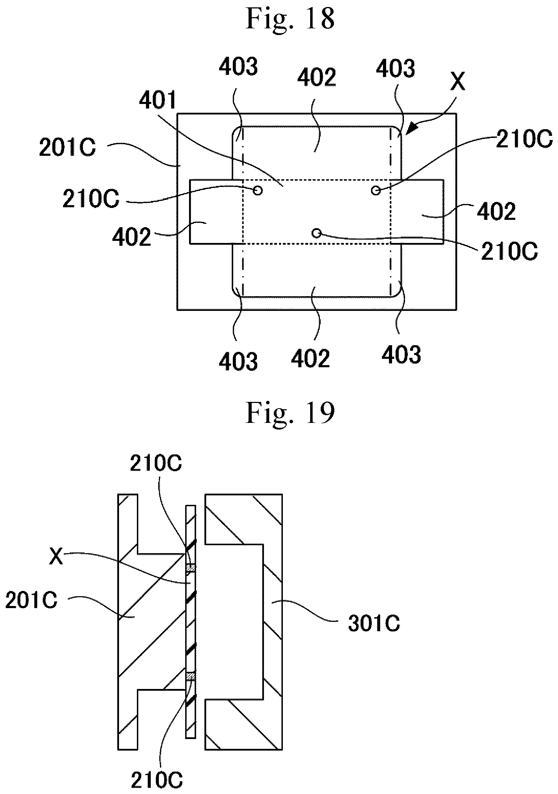

FIG. 18 is a front view of a fixed mold 201C in a state in which the pattern-cut composite material X is fixed by a fixing member 210C. As shown in FIG. 18, for example, in a portion 401 that becomes the bottom surface of the rectangular box, it is preferable to fix the composite material X to the fixed mold 201C by the fixing member 210C at a plurality of locations spaced apart in the horizontal direction.

FIG. 19 is a horizontal cross-sectional view of the fixed mold 201C in which the composite material X is fixed by the fixing member 210C, and a movable mold 301C. When the mold is opened and closed in the horizontal direction (left-right direction in FIG. 19), the composite material X needs to be disposed such that a plate surface thereof is in a vertical direction (a direction perpendicular to a paper surface in FIG. 19). At this time, when the pattern-cut composite material X is used, the composite material may sag in an unintended direction as compared to a composite material having a simple shape such as a square or a rectangle. Therefore, by appropriately fixing the composite material X to the mold fixed mold 201C using the fixing member 210C, the composite material X can be suitably prevented from sagging in the unintended direction.

In FIG. 18, the composite material X may be pre-shaped such that the portions 402 that are a side surface and the margin 403, which are higher than the portion 401 that becomes the bottom surface fixed to the fixed mold 201C by the fixing member 210C, fall toward the fixed mold 201C in advance without falling toward the movable mold 301C (see FIG. 19) side.

[Injection from Fixed Mold and Design]

Hereinafter, injection from the fixed mold and design property will be described. It is preferable that the step (3) of injecting the injection-molding material Y into the mold include a step of injecting the injection-molding material Y between the fixed mold and the movable mold, and the injection of the injection-molding material Y from the fixed mold be performed. The injection of the injection-molding material Y from the fixed mold is preferred since a facility for the injection from the fixed mold is not excessively complicated as compared with injection of the injection-molding material Y from the movable mold.

1. Formation of Design Surface

When the injection of the injection-molding material Y from the fixed mold is performed, it is preferable that the design surface be formed by the movable mold. This is because a mark of the injection gate remains on a surface of the molded body that is formed by the fixed mold, while the mark of the injection gate does not remain on a surface formed by the movable mold. At this time, the design property of the molded body can be improved by, for example, applying the following ingenuity to the composite material X or the movable mold

2. Composite Materials and Design Surfaces

When the injection is performed from the fixed mold, it is preferable to fill a space between the movable mold and the composite material X with the injection-molding material. By filling the space between the movable mold and the composite material X with the injection-molded material, fibers contained in the composite material can be hidden. The skin layer is formed by filling the space between the movable mold and the composite material X with the injection-molding material.

The thickness of the skin layer is preferably 50 $\mu$m or more and 300 $\mu$m or less, and preferably 70 $\mu$m or more and 200 $\mu$m or less.

2.1 Distribution Hole

When a design surface is formed by the movable mold and the space between the movable mold and the composite material X is filled with the injection-molding material Y, it is preferable that at least one flow hole X1 for passing the injection-molding material Y is provided in the composite material X, and the injection-molding material Y injected from the gate 203 of the fixed mold 201B flow through the flow hole X1 and be injected between the composite material X and the movable mold 301B, for example, as shown in FIG. 15. When the injection-molding material Y injected from the fixed mold 201B passes through the flow hole X1, the injection-molding material Y can enter the space between the composite material X and the movable mold 301B. At this time, it is preferable to provide the gate 203 in a region of the fixed mold 201B where the composite material X is placed.

2.2 Placing of Resin Sheet

When the design surface is formed by the movable mold, it is preferable to place a resin sheet between the composite material X disposed in the fixed mold and the movable mold. It is preferable that the resin sheet do not contain fibers since the transfer property of a mold mirror surface of the movable mold is good. By providing the resin sheet, the design surface can be easily formed on the molded body. The resin sheet may be laminated on the composite material X and then placed on the fixed mold, or the resin sheet may be laminated on the composite material X after the composite material X is placed on the fixed mold.

2.3 Grain

When the design surface of the molded body is formed by the movable mold, the design surface may have a grain shape formed by the movable mold. By transferring the mold surface of the movable mold to create a grain shape in the molded body, the reinforcing fibers contained in the composite material can be made less conspicuous, and the design property is improved. A resin-rich layer may be provided on the surface of the composite material X so that the grain shape of the mold surface of the movable mold is easily transferred to the composite material X, or a resin sheet may be disposed between the movable mold and the composite material X when the composite material X is placed in the fixed mold.

This application claims priority to Japanese Patent Application No. 2022-149322 filed on September 20, 2022 and Japanese Patent Application No. 2022-196925 filed on December 9, 2022.

REFERENCE SIGNS LIST

1: Door inner panel
2: Beam portion
3L, 3R: Side frame
4: Lower half portion
5: Window opening
6: Hinge fastening portion
7: Damper fastening portion
8: Trunk lock
91, 92, 93: Metal fitting
201, 201A, 201B, 201C: Fixed mold
202, 203, 204: gate
205: Hole-forming member
210, 210C: Fixing member
301, 301B, 301C: Movable mold

Claims

1. A method of manufacturing a door inner panel comprising a side frame that is integrally molded from a composite material X containing reinforcing fibers dispersed in an in-plane direction and an injection-molding material Y and extends in a vertical direction, the method comprising the following steps (1) to (4):

   (1) placing the composite material X on a fixed mold of a mold;
   (2) lowering a movable mold of the mold to bring the movable mold into contact with the composite material X;
   (3) injecting the injection-molding material Y into the mold; and
   (4) pressing the composite material X and the injection-molding material Y in the mold to integrally mold the door inner panel.

2. The method of manufacturing a door inner panel according to claim 1, wherein the mold has a region where the composite material X is placed at a position corresponding to the side frame, and
   has a first gate for injecting the injection-molding material Y into the mold at the region where the composite material X is placed.

3. The method of manufacturing a door inner panel according to claim 1 or 2, wherein the composite material X is brought into contact with a cavity wall surface of the mold to form a skin layer having an X portion that is molded from the composite material X.

4. The method of manufacturing a door inner panel according to claim 3, wherein the skin layer having the X portion is formed on a surface of the door inner panel, the surface facing an inside of a vehicle.

5. The method of manufacturing a door inner panel according to claim 3, wherein the skin layer having the X portion is formed on a surface of the door inner panel, the surface facing an outside of a vehicle.

6. The method of manufacturing a door inner panel according to any one of claims 1 to 5, wherein

   the mold has the first gate for injecting the injection-molding material Y into the mold at the region where the composite material X is placed, and a second gate for injecting the injection-molding material Y into the mold at a region other than the region where the composite material X is placed, and
   a number $n1$ of the first gate and a number $n2$ of the second gate satisfy $n1 > n2 \geq 0$.

7. The method of manufacturing a door inner panel according to any one of claims 1 to 5, wherein

   the mold has the first gate for injecting the injection-molding material Y at the region where the composite material X is placed in the mold, and a second gate for injecting the injection-molding material Y at a region other than the region where the composite material X is placed in the mold, and
an amount V1 of the injection-molding material Y discharge from the first gate and an amount V2 of the injection-molding material Y discharged from the second gate satisfy V1 > V2 ≥ 0.

8. The method of manufacturing a door inner panel according to claim 1 or 2, wherein the injection-molding material Y is brought into contact with a cavity wall surface of the mold to form a skin layer having a Y portion that is molded from the injection-molding material Y.

9. The method of manufacturing a door inner panel according to any one of claims 1, 2, and 8, wherein

the mold has the first gate for injecting the injection-molding material Y at the region where the composite material X is placed in the mold, and the second gate for injecting the injection-molding material Y at the region other than the region where the composite material X is placed in the mold, and
a number n1 of the first gate and a number n2 of the second gate satisfy 0 < n1 < n2.

10. The method of manufacturing a door inner panel according to any one of claims 1, 2, 8, and 9, wherein

the mold has the first gate for injecting the injection-molding material Y into the mold at the region where the composite material X is placed, and the second gate for injecting the injection-molding material Y into the mold at the region other than the region where the composite material X is placed, and
an amount V1 of the injection-molding material Y discharge from the first gate and an amount V2 of the injection-molding material Y discharged from the second gate satisfy 0 < V1 < V2.

11. The method of manufacturing a door inner panel according to any one of claims 1 to 10, wherein

a surface of the side frame on the inside of the vehicle is an interior design portion of the vehicle, and
in the step (4), a shape of a grain provided on an inner wall surface of a cavity of the mold is transferred to the interior design portion.

12. The method of manufacturing a door inner panel according to any one of claims 1 to 11, wherein

at least one of the movable mold and the fixed mold has a hole-forming member for forming a hole in the door inner panel,
in a step prior to the step (1), a hole Xa is formed in the composite material X, and in the step (1), the composite material X is placed on the mold so that the hole Xa corresponds to the hole-forming member.

13. The method of manufacturing a door inner panel according to claim 12, wherein the hole Xa is formed at a position corresponding to an upper portion of the side frame of the composite material X and a position corresponding to a lower portion of the side frame.

14. The method of manufacturing a door inner panel according to any one of claims 1 to 13, wherein in the step (3), the injection-molding material Y is kneaded before injection, and the injection-molding material Y is filled in a clearance between the movable mold and the fixed mold.

15. The method of manufacturing a door inner panel according to claim 1, wherein

the composite material X contains reinforcing fibers A having a weight average fiber length LwA of 1 mm or more and 100 mm or less,
the injection-molding material Y contains reinforcing fibers B having a weight average fiber length LwB smaller than LwA, and
a mechanical strength of a reinforcing portion formed from the composite material X is higher than a mechanical strength of a main body formed from the injection-molding material Y.

16. The method of manufacturing a door inner panel according to any one of claims 1 to 15, wherein the door inner panel is a back door inner panel.

17. The method of manufacturing a door inner panel according to claim 16, wherein a metal fitting for connecting a hinge is placed at a region connected to the hinge before the step (2), and the metal fitting is insert-molded with the composite material X and the injection-molding material Y.

18. The method of manufacturing a door inner panel according to claim 16, wherein a metal fitting for connecting a trunk lock is placed at a region where the trunk lock is mounted before the step (2), and the metal fitting is insert-molded with the composite material X and the injection-molding material Y.

19. The method of manufacturing a door inner panel according to any one of claims 16 to 18, wherein

the door inner panel has a lower half portion,
a pair of side frames extending upwardly from an upper left end and an upper right end of the lower half portion, and
a beam portion connecting the upper ends of the pair of side frames, and
a central portion of the beam portion and the lower half portion are formed from an injection-molding material Y.

20. The method of manufacturing a door inner panel according to claim 17 or 18, wherein the metal fitting is a metal fastener having a bolt insertion portion, and
the door inner panel has a hole at a position corresponding to the bolt insertion portion.

21. The method of manufacturing a door inner panel according to claim 20, wherein a hole is formed at a position corresponding to the bolt insertion portion of the Y portion molded from the injection-molding material Y.

22. The method of manufacturing a door inner panel according to claim 20 or 21, wherein the metal fitting is in contact with the Y portion molded from the injection-molding material Y.

23. The method of manufacturing a door inner panel according to claim 20 or 21, wherein the metal fitting is not in contact with the X portion molded from the composite material X.

24. The method of manufacturing a door inner panel according to any one of claims 20 to 23, wherein the door inner panel has a rib within 30 mm or less from the metal fitting.

25. The method of manufacturing a door inner panel according to claim 20 or 21, wherein the door inner panel has an uneven thickness portion within 30 mm from the metal fitting.

26. The method of manufacturing a door inner panel according to any one of claims 20 to 25, wherein in the step (4), a hole is formed at a position of the door inner panel corresponding to the bolt insertion portion.

27. The method of manufacturing a door inner panel according to any one of claims 20 to 22 and 25, wherein

at least one of the movable mold and the fixed mold includes a hole-forming member for forming a hole at a position corresponding to the bolt insertion portion,
in a step prior to the step (1), a hole Xa is formed in the composite material X,
in the step (1), the composite material X is placed on the mold so that the hole Xa corresponds to the hole-forming member, and
in the step (4), a hole is formed from the hole-forming member at a position of the door inner panel corresponding to the bolt insertion portion.

28. A door inner panel comprising:

a lower half portion;
a pair of side frames extending upwardly from an upper left end and an upper right end of the lower half portion; and
a beam portion connecting the upper ends of the pair of side frames, wherein
the pair of the side frames has an X portion molded from a composite material X containing reinforcing fibers dispersed in an in-plane direction and a Y portion molded from an injection-molding material Y, and
a central portion of the beam portion and the lower half portion include the Y portion molded from the injection-molding material Y.

Fig. 1

Fig. 2

Fig. 3

Fig. 4

Fig. 5

Fig. 6

Fig. 7

Fig. 8

Fig. 9

301

X

201

203

Fig. 10

X

Y

301

201  203

Fig. 11

Fig. 12

EP 4 592 111 A1

Fig. 13

31

Fig. 14

Fig. 15

Fig. 16

400

Fig. 17

X

403   402   403

401

402                    402

402

403   402   403

## Fig. 18

## Fig. 19

EP 4 592 111 A1

## INTERNATIONAL SEARCH REPORT

| International application No. |
|---|
| **PCT/JP2023/027973** |

| A. | CLASSIFICATION OF SUBJECT MATTER |
|---|---|

*B60J 5/10*(2006.01)i; *B29C 43/18*(2006.01)i; *B29C 45/14*(2006.01)i; *B29C 70/42*(2006.01)i
FI:    B60J5/10 R; B29C43/18; B29C45/14; B29C70/42

According to International Patent Classification (IPC) or to both national classification and IPC

| B. | FIELDS SEARCHED |
|---|---|

Minimum documentation searched (classification system followed by classification symbols)

B29C45/14; B29C43/18; B29C70/42; B60J5/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2005-059632 A (KASAI KOGYO CO LTD) 10 March 2005 (2005-03-10) paragraphs [0039]-[0070], fig. 1-15 | 1-7, 9-11, 14-26 |
| Y | | 8, 12-13, 27-28 |
| Y | JP 06-144123 A (KASAI KOGYO CO LTD) 24 May 1994 (1994-05-24) paragraph [0024], fig. 5 | 8, 12-13, 27-28 |
| Y | JP 2001-138356 A (KASAI KOGYO CO LTD) 22 May 2001 (2001-05-22) paragraph [0041]-[0049], fig. 11-16 | 12-13, 27-28 |
| A | JP 03-015509 A (KASAI KOGYO CO LTD) 23 January 1991 (1991-01-23) entire text, all drawings | 1-28 |
| A | JP 2002-137249 A (SUMITOMO CHEM CO LTD) 14 May 2002 (2002-05-14) entire text, all drawings | 1-28 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 October 2023** | **17 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

| | International application No. |
| --- | --- |
| | **PCT/JP2023/027973** |

| Patent document<br>cited in search report | Publication date<br>(day/month/year) | Patent family member(s) | Publication date<br>(day/month/year) |
| --- | --- | --- | --- |
| JP 2005-059632 A | 10 March 2005 | (Family: none) | |
| JP 06-144123 A | 24 May 1994 | (Family: none) | |
| JP 2001-138356 A | 22 May 2001 | (Family: none) | |
| JP 03-015509 A | 23 January 1991 | (Family: none) | |
| JP 2002-137249 A | 14 May 2002 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015091448 A
- JP 2019010910 A
- WO 2020196076 A
- JP 2020179549 A
- JP 2022149322 A
- JP 2022196925 A